# EUROPEAN PATENT SPECIFICATION

(11) **EP 3 277 488 B1**
(45) Date of publication and mention of the grant of the patent: **08.05.2019**
(21) Application number: 16711291.1
(22) Date of filing: 23.03.2016
(51) Int. Cl.: B29D 30/06, B29C 33/40, C08L 23/16, C08L 23/22, C08L 23/28

(54) **CURABLE RUBBER COMPOSITION**
HÄRTBARE GUMMIZUSAMMENSETZUNG
COMPOSITION MOUSSANTE DE CAOUTCHOUC

(30) Priority: 30.03.2015 EP 15161598
(43) Date of publication of application: 07.02.2018
(73) Proprietor: Arlanxeo Netherlands B.V., 6167 RD Geleen (NL)
(72) Inventor: HOUGH, Philip, 6127 AG Grevenbicht (NL)
(74) Representative: Marx, Thiemo Patrick
(86) International application number: PCT/EP2016/056339
(87) International publication number: WO 2016/156139

(56) References cited:
- WO-A1-2008/044063
- DATABASE WPI Week 198017 Thomson Scientific, London, GB; AN 1980-30574C XP002744019, & SU 681 076 A (BOBROV A P) 25 August 1979 (1979-08-25)
- DATABASE WPI Week 200436 Thomson Scientific, London, GB; AN 2004-385512 XP002743955, & KR 2003 0090284 A (HANKOOK TIRE MFG CO LTD) 28 November 2003 (2003-11-28)
- DATABASE WPI Week 200782 Thomson Scientific, London, GB; AN 2007-888461 XP002744020, & JP 2007 238673 A (TAOKA KAGAKU KOGYO KK) 20 September 2007 (2007-09-20)
- DATABASE WPI Week 200436 Thomson Scientific, London, GB; AN 2004-385512 XP002744021, & KR 2003 0090284 A (HANKOOK TIRE MFG CO LTD) 28 November 2003 (2003-11-28)

## Description

The invention relates to a curable rubber composition, its cured expandable rubber bladders and a method of curing pneumatic rubber tires by utilizing such expandable rubber tire curing bladder in a tire curing press.

### BACKGROUND OF THE INVENTION

From an historical perspective, pneumatic rubber vehicle tires are conventionally produced by molding and curing a green or uncured, and unshaped tire, with the aid of an expandable rubber curing bladder, in a molding press. The green tire is pressed outwardly against a mold surface by means of an inner fluid-expandable tire curing bladder. By this method, the green tire is shaped against the inner mold surface which defines the tire tread pattern and configuration of the tire sidewalls. By inflating the tire curing bladder by means of hot, pressurized gasses and fluids, heat and pressure is applied to the inside of the green tire, forcing it to comply to the shape of the tire mould and to reach the temperature necessary for curing to take place. The tire is molded and cured within the suitable tire mold at elevated temperatures. Inflation of the tire curing bladder to shape the green tire causes the tire curing bladder to undergo localized flexing, particularly in the area where it is clamped into position within the mould. It is therefore important for the expandable tire curing rubber bladders to have a very high De Mattia flex fatigue resistance in order to be used in as many curing cycles as possible, before flex fatigue damage makes replacement of the tire curing bladder necessary.

Conventionally a tire curing bladder is composed of a butyl rubber composition. Even combinations of butyl rubber with quite high amounts of EPDM with an exemplified high ENB amount of 8 wt.% have been described in US2006125146. However, both the pure butyl rubber based curing bladders as well as the IIR/EPDM blends known from US2006125146 have a limited lifetime in tire manufacturing. Hence, it was an object to improve the De Mattia flex fatigue and the heat aging resistance of tire curing bladders even further.

In US-B2- 6403713 EPDM/IIR mixtures for curing bladders are disclosed, which require a certain triazole as curing agent. CN-103694581 uses this curing system for other purposes.

JP-B-2012232517 discloses EPDM/IIR mixtures having quite a high amount of EPDM and being cured with a resin/sulfur system. JP-B-2012232517 also shows that by either reducing the EPDM amount or by the use of a single curing system the resulting compounds would lose performance.

From SU 681076A butyl rubber mixtures containing very special EPDMs are known to increase operational endurance of rubbers. The EPDM amount of such mixtures is limited to 5 to 30 phr and the Mooney viscosity ML (1+4) at 100 °C is from 30 to 50.

The teaching is however very limited for this purpose with regard to viscosity and the amount of EPDM, since mixtures with other amounts/viscosities do not perform well.

The invention therefore relates to a rubber composition containing based upon parts by weight per 100 parts by weight rubber (phr):
(A) 20 to 50, preferably 31 - 50, in particular 35 to 45 phr of a copolymer of ethylene, at least one C3 to C23 α-olefin and a least one polyene monomer, whereby copolymer unit derived from the polyene is 1 to 5 wt.%, preferably 2 to 2,9 wt.%, in particular 2 to 2.7 wt% by weight of the copolymer (A) and has a Mooney viscosity ML (1+4) at 100 °C from 51 or greater, in particular from 55 to 100 at 100 °C, preferably from 55 to 90 at 100 °C, most preferably from 55 to 80 at 100 °C.
(B) 50 to 80 phr, in particular 50 - 61 phr, in particular 55 to 65 phr of butyl-type rubber preferably selected from at least one butyl rubber or halobutyl rubber, in particular chlorinated or brominated copolymer of isobutylene and para methyl-styrene and
(C) a resin-based curative, containing a phenol formaldehyde resin cross-linker as the only curing agent and an activator package comprising of metal oxide and a halogen donor where a halogenated component (B) or halogenated cross-linker as part of component (C) is not already present.

Surprisingly, it was found that vulcanizates obtained from compositions of the present invention show a smaller loss of tensile strength after aging compared to respective compounds with EPDM having a higher ENB content as known from US2006/125146 as well as from rubber mixtures with EPDM rubbers of lower Mooney viscosities like the grades used in SU 681076A..

### Component (A)

Preferred copolymers of ethylene, at least one C3 to C23 α-olefins and a least one polyene monomer ethylene, are those wherein the C3 to C23 α-olefins is propylene, 1-butene, 1-pentene, 1-hexene, 1-octene and styrene, branched chain α-olefins such as 4-methylbutene-1,5-methylpent-1-ene, 6-methylhept-1-ene, or mixtures of said α-olefins. Propylene is the preferred α-olefin.

The polyene monomer preferably is selected from non-conjugated dienes and trienes. The copolymerization of diene or triene monomers allows the introduction of one or more unsaturated bonds.

The non-conjugated diene monomer preferably has from 5 to 14 carbon atoms. Preferably, the diene monomer is characterized by the presence of a vinyl or norbornene group in its structure and can include cyclic and bicyclo compounds. Representative diene monomers include 1,4-hexadiene, 1,4-cyclohexadiene, 1,5-hexadiene, 1,6-heptadiene, 1,7-octadiene, dicyclopentadiene, 5-ethylidene-2-norbornene, 5-vinyl-2-norbornene, 5-methylene-2-norbornene, 1,5-heptadiene, and 1,6-octadiene. The copolymer may comprise a mixture of more than one diene monomer. Preferred non-conjugated diene monomers for preparing a copolymer are 1,4-hexadiene (HD), dicyclopentadiene (DCPD), 5-ethylidene-2-norbornene (ENB) and 5-vinyl-2-norbornene (VNB). Particular preferred is 5-ethylidene-2-norbornene (ENB) or a combination of 5-ethylidene-2-norbornene (ENB) and 5-vinyl-2-norbornene (VNB).

The triene monomer will have at least two non-conjugated double bonds, and up to about 30 carbon atoms. Typical triene monomers useful in the copolymer of the invention are 1-isopropylidene-3,4,7,7-tetrahydroindene, 1 isopropylidene-dicyclo-pentadiene, dihydro-isodicyclopentadiene, 2-(2-methylene-4-methyl-3-pentenyl) [2.2.1] bicyclo-5-heptene, 5,9-dimethyl-1,4,8-decatriene, 6,10-dimethyl-1,5,9-undecatriene, 4-ethylidene-6,7-dimethyl-1,6-octadiene, 7-methyl-1,6-octadiene and 3,4,8-trimethyl-1,4,7-nonatriene.

The preferred ethylene content, or more precisely, the ethylene unit content of the copolymer of component (A) is 48 to 70 % by weight of the polymer. Here, the "unit" means a polymerized monomer unit. For example, the "ethylene unit" means a polymerized ethylene unit.

In particular the α-olefin content is the balance to ethylene and the diene. Preferably the C₂/α-olefin ratio is from 73/27 to 40/60.

The copolymer (A) preferably has a weight average molecular weight (Mw) measured by high temperature GPC of at least 150,000 g/mol, preferred at least 180,000 g/mol, in particular from 180,000 to 500,000 g/mol, more preferred 180.000 to 260.000 g/mol. The intrinsic viscosity, measured in decalin at 135 °C, will preferably be in the range 1 to 5, preferably in the range 1.5 to 2.

The polydispersity, namely, weight average molecular weight / number average molecular weight, measured by high temperature gel permeation chromatography of the ethylene-α-olefin-non-conjugated diene copolymer (A) is preferably in the range of 2 to 6, preferably 2 to 4.

### Butyl-type rubber (B)

Butyl rubber is conventionally used for rubber compositions for tire curing bladders. The term "butyl rubber" as used herein refers to a copolymer of isobutylene and preferably small amounts, in particular from 1 to 20 wt-%, more preferred from 1 to 10 wt-%, in particular 1 to 5 wt-% of conjugated diene monomers, preferably isoprene to provide sufficient unsaturation in the butyl rubber to allow it to be cross-linked through the resultant double bonds, unless otherwise indicated.

As used herein, the term "butyl-type" rubber refers to such butyl rubber and also includes halogenated butyl rubber that has been halogenated with chlorine or bromine such as for example, chlorobutyl rubber and bromobutyl rubber, and brominated copolymers of isobutylene and para methylstyrene, unless otherwise indicated.

In the description of this invention the term "phr" is sometimes used to refer to "parts per hundred parts by weight of rubber" for various ingredients in a rubber composition. The terms "cure" and "vulcanize" are intended to be interchangeable terms unless otherwise noted.

A preferred butyl type rubber (B) is butyl rubber which is the type of synthetic rubber made by copolymerizing an iso-olefin with a minor proportion of a polyene having from 4 to 14 carbon atoms per molecule. The iso-olefins generally have from 4 to 7 carbon atoms and such iso-olefins as isobutylene or ethyl methyl ethylene are preferred. The polyene usually is an aliphatic conjugated diolefin having from 4 to 6 carbon atoms, and is preferably isoprene or butadiene.

Preferably, said butyl type rubber (B) is a copolymer of isobutylene and isoprene, containing 1 to about 5 weight percent units derived from isoprene.

### Resin-based curative (C)

The phenol formaldehyde resin cross-linker may also be designated as phenolic resin, resin cross-linker or resol which shall all have identical meanings within this application and denote a phenol and formaldehyde based condensation product used as rubber curing agent.

The phenol formaldehyde resin cross-linker of component (C) can be present in the composition according to the invention as such, or can be formed in the composition by an in-situ process from phenol and phenol derivatives with aldehydes and aldehyde derivatives. Suitable examples of phenol derivatives include alkylated phenols, cresols, bisphenol A, resorcinol, melamine and formaldehyde, particularly in capped form as paraformaldehyde and as hexamethylene tetramine, as well as higher aldehydes, such as butyraldehyde, benzaldehyde, salicylaldehyde, acrolein, crotonaldehyde, acet-aldehyde, glyoxilic acid, glyoxilic esters and glyoxal.

Resols based on alkylated phenol and/or resorcinol and formaldehyde are particularly suitable.

Examples of suitable phenolic resins are octyl-phenol formaldehyde curing resins. Commercial resins of this kind are for example Ribetak R7530E, delivered by Arkema, or SP1045, delivered by SI Group.

In another preferred embodiment of the invention the phenol formaldehyde resin cross-linker is halogenated. Such halogenated resin represents the combined functionality of above phenolic resin and halogenated organic compound as described below. Preferred are brominated phenolic resins. A commercial resin of this kind is for example SP1055 (delivered by SI Group).

Good rubber products are obtained if 0.5 - 20 parts of the phenol formaldehyde resin cross-linker are present per 100 parts of rubber. Preferably 1 - 15 parts, more preferably 2 - 10 parts of resin-based curative are present.

With respect to the activator package as part of the resin based curative component (C), the activator package may comprise one or more accelerators or catalysts to work in conjunction with the phenolic resin.

The primary function of an accelerator in a rubber composition is to increase the rate of curing. Such agents may also affect the cross-lining density and corresponding physical properties of the vulcanized rubber composition, so that any accelerator additive should tend to improve such properties.

With respect to the halogen donor it is not required where a halogenated component (B) or halogenated cross-linker as part of component (C) not already present. But certainly can be present in addition thereto.

In a preferred embodiment of the invention the activator package comprises a metal halide as halogen donor.

The metal halide accelerators of the invention are exemplified by such known acidic halides as tin chloride, zinc chloride, aluminum chloride and, in general, halides of the various metals of group 3 or higher of the periodic system of elements. This class includes, inter alia, ferrous chloride, chromium chloride and nickel chloride, as well as cobalt chloride, manganese chloride and copper chloride. The metal chlorides constitute a preferred class of accelerators in the composition of the invention. However, acceleration is obtainable with metal salts of other halides such as aluminum bromide and stannic iodide. Metal fluorides such as aluminum fluoride can accelerate, although aluminum fluoride is not particularly desirable. Of the metal chlorides, the most preferred are those of tin, zinc and aluminum.

The heavy metal halides are effective independently of the state of oxidation of the metal, and they are even effective if the halide is partially hydrolyzed, or is only a partial halide, as in zinc oxychloride.

In order to improve the preparation of the rubber composition, it is desirable that the metal halide is further coordinated with complexating agents such as water, alcohols and ethers. Such complexated metal halides have improved solubility and dispersability in the rubber compositions. A preferred example is tin dichloride dihydrate. The preferred amount of a metal halides as activator package is from 0.25 - 5.0 parts, preferably 0.5 to 2 parts per 100 parts of rubber components (A) and (B).

In another preferred embodiment of the invention the activator package comprises as halogen donor a halogenated organic compound.

Suitable halogenated organic compounds are those compounds from which hydrogen halide is split off in the presence of a metal compound.

Halogenated organic compounds include, for example, polymers or copolymers of vinyl chloride and/or vinylidene chloride other polymerizable compounds, halogen containing plastics, for example polychloroprene; halogenated, for example chlorinated or brominated butyl rubber; halogenated or chlorosulphonated products of high-density or low-density polyethylene or higher polyolefins; colloidal mixtures of polyvinyl chloride with an acrylonitrile-butadiene copolymer; halogenated hydrocarbons containing halogen atoms which may be split off or which may split off hydrogen halide, for example liquid or solid chlorination products of paraffinic hydrocarbons of natural or synthetic origin; halogen containing factice, chlorinated acetic acids; acid halides, for example lauroyl, oleyl, stearyl or benzoyl chlorides or bromides, or compounds such as for example N-bromosuccinimide or N-bromo-phthalimide.

If polychloroprene is used as a halogenated polymer co-curative, sometimes referred to as a "neoprene rubber", which acts as a halogen donor for activating the resin cure system, namely a form of a chlorine source, together with a phenol-formaldehyde resin co-curative, preferably the polychloroprene rubber is used in an amount of 2 to 10 phr.

The preferred amount of a halogenated organic compounds used as the activator package is from 0.5 - 10.0 parts, preferably 2 to 5 parts per 100 parts of rubber components (A) and (B).

In one embodiment of the invention the activator package c) further comprises a heavy metal oxide. In the context of the present invention a heavy metal is considered to be a metal with an atomic weight of at least 46 g/mol. Preferably the heavy metal oxide is zinc oxide, lead oxide or stannous oxide.

Such heavy metal oxide is recognized to be especially useful in combination with the above mentioned halogenated organic compound and/or halogenated phenolic resin. A further advantage described in the experiments of the present application is the moderation of the cure rate, e.g. scorch retardation and the stabilization of the vulcanized compounds against thermal aging.

An advantage of the heavy metal oxide in the composition according to the present invention is an improved heat aging performance of the vulcanized rubber composition reflected by the retention of tensile properties after heat aging.

Good results are obtained with from 0.5 - 10.0 parts of heavy metal oxide per 100 parts of rubber components (A) and (B). Preferably with 0.5 - 5.0, more preferably with 1 - 2 parts of heavy metal oxide. It is preferred to use a sufficient amount of heavy metal oxide, so to achieve an acceptable scorch time and good thermal stability of the vulcanized compound.

### Further ingredients

Preferably, the rubber composition of the present invention contains from 0 to 15 phr, in particular from 0.1 to 15 phr of at least one processing oil and/or wax. In particular the oil is at least one selected from the group consisting of castor oil, corn oil and soybean oil. Oils also include, for example, aliphatic, paraffinic, naphthenic and aromatic types. Various waxes may be used in the curing bladder rubber composition of the present invention depending upon the compatibility of the oils and waxes with the rubbers of the composition and the other components of the rubber formulation. Preferably waxes include, for example, microcrystalline wax and paraffin wax. Waxes can be used in conventional individual amounts such as, for example, from 1 to 10 preferably 1 to 10 phr. They are usually considered plasticizers and modulus modifiers.

Furthermore fatty acids such as stearic acid, palmitic acid and oleic acid may be used in amounts from 0.1 to 7 phr with a range of about 0.2 to 6 phr sometimes being more preferred.

Also preferred is the use of antidegradants in the curing bladder composition according to the present invention to retard or prevent oxidative crosslinking or oxidative chain scission so that the modulus and fracture properties of the rubber are unchanged during exposure to oxidation especially at elevated temperatures. Preferred antidegradants like antioxidants and antiozonants may be used, for example, in amounts ranging from about 0.1 to 5 phr. Antidegradants may include, for example, various monophenols, bisphenols, thiophenols, polyphenols, hydroquinone derivatives, phosphites, phosphate blends, thioesters, naphthylamines, diphenol amines as well as other diaryl amine derivatives, para-phenylenes, diamines, quinolines, and blended amines that have an antidegradant effect.

Also fillers may be incorporated into the curing bladder composition according to the present invention. They may be used, for example, in amounts of about 20 to about 100 phr. A preferred reinforcing filler is carbon black. Silica may be used, if desired, in addition to the carbon black. Silicas are generally described as amorphous silicas, particularly precipitated silicas. Representative of various rubber reinforcing carbon blacks are, for example, according to standard ASTM designations, acetylene black (e.g. N990), N110, N121, N220, N231, N234, N242, N293, N299, N326, N330, N332, N339, N343, N347, N351, N358, N375, N472, N539, N550, N683, N754, and N765, although acetylene black and N347 and/or N220 carbon blacks are usually preferred. Preferably a major portion of the carbon black is acetylene black.

The invention also refers to a cured article of the rubber composition of the present invention, in particular to an expandable tire curing bladder of the cured above mentioned rubber composition.

The invention also refers to a method of shaping and curing an uncured pneumatic rubber tire in a mold using an expandable rubber bladder to shape and cure said uncured pneumatic rubber tire, comprised of the sequential steps of:
(A) inserting an uncured pneumatic rubber tire into a curing press comprised of a rigid mold having an expandable tire curing bladder positioned therein, said rigid mold having at least one molding surface,
(B) expanding said expandable rubber bladder by filling the internal portion of said expandable tire cure rubber bladder with a fluid to cause the expandable rubber bladder to expand outwardly against an inner surface of said uncured pneumatic rubber tire to force said uncured pneumatic tire against said molding surface(s) of said mold;
(C) curing said pneumatic rubber tire within said mold under conditions of heat preferably elevated temperature in a range of 150 to 180 °C and pressure, preferably a pressure greater than atmospheric pressure, and
(D) deflating said expandable tire curing bladder and removing said cured pneumatic rubber tire from said mold;
wherein said expandable tire curing bladder used in this process is said expandable tire curing bladder of the present invention.

The invention may be better understood by reference to the following examples in which the parts and percentages are by weight unless otherwise indicated.

### EXAMPLES

Compounds described in the examples were mixed in a Harburg Freudenberger 1.5 litre internal mixer having an intermeshing rotor configuration, and using a fill factor of 68%. To achieve the best possible dispersion, while controlling cure safety, a two-step mixing process was employed. In the first mixing step the polymers, (butyl rubber, EPDM and if used polychloroprene as part of the curing package), were introduced to the mixer at an initial mixer body temperature of 40°C and blended together for 30 seconds using a rotor speed of 45rpm. Fillers and optionally oil were then added, and the rotor speed was increased after a further 30 seconds in a stepwise manner, first to 70rpm, then after a further 20 seconds to 150rpm. Mixing was allowed to proceed until a batch temperature of 170°C was achieved, taking approximately 2½ minutes, when the batches were removed from the mixer and transferred to a two roll mill (Troester® WNU 2) for cooling and sheeting off.

After the batches had cooled to 23°C (room temperature), they were returned to the internal mixer and mixed using a rotor speed of 45rpm until a temperature of 70°C was reached, when the curing resin optionally as masterbatch with some additional butyl rubber like Rhenogran® PCZ-70/IIR was added. Mixing continued until the batches reached a temperature of 100°C, when stearic acid was added. The rotor speed was then reduced (approximately 30rpm) to maintain a batch temperature of 100°C for a further minute before the batches were removed and transferred to the two roll mill for cooling and sheeting off.

Analysis of cure rheology was carried out using a moving die rheometer (MDR2000E) with test conditions of 60 minutes at 180°C, according to ISO 6502:1999. The rheometer data was used to establish cure times to produce moulded 2mm tensile test sheets from each batch, being equivalent to 2 x t'c(90) at 180°C.

Resistance to the formation of cracks due to flex fatigue was measured using a DeMattia Flexing Machine according to ASTM D430 - 06, Method B. In accordance with the standard, the number of cycles were recorded at progressive levels of crack severity as described by the standard, i.e.
**Grade 0** No cracking has occurred.
**Grade 1** Cracks at this stage appear as pin pricks to the naked eye. Grade as 1 if the pin pricks are less than 10 in number and less than 0.5 mm in length.
**Grade 2** Assess as Grade 2 if either of the following applies:
   (*1*) The pin pricks are in excess of 10 in number, or
   (2) The number of cracks is less than 10 but one or more cracks have developed beyond the pin prick stage, that is, they have perceptible length without much depth, but their length is still less than 0.5 mm.
**Grade 3** Assess as Grade 3 if one or more of the pin pricks have become obvious cracks with a length greater than 0.5 mm but not greater than 1.0 mm.
**Grade 4** The length of the largest crack is greater than 1.0 mm but not greater than 1.5 mm (0.06 in.).
**Grade 5** The length of the largest crack is greater than 1.5 mm but not greater than 3.0 mm (0.12 in.).
**Grade 6** The length of the largest crack is greater than 3.0 mm but not greater than 5.0 mm (0.20 in.).
**Grade 7** The length of the largest crack is greater than 5.0 mm but not greater than 8.0 mm (0.31 in.).
**Grade 8** The length of the largest crack is greater than 8.0 mm but not greater than 12.0 mm (0.47 in.).
**Grade 9** The length of the largest crack is greater than 12.0 mm but not greater than 15.0 mm (0.60 in.).
**Grade 10** The length of the largest crack is greater than 15.0 mm. This indicates complete failure of the specimen.

The lower the grade observed, the more curing cycles in the operation of the curing bladders can be expected.

### Example 1

Table 1 shows Comparative Experiment A, a typical resin cured butyl formulation being representative of the type of formulation used in the manufacture of tire curing bladders. Examples 1, 3 and 5 as well as Comparison Examples 2, 4 and 6 introduce EPDM 1 and EPDM 2 (see table 2) respectively by replacing Butyl 1 at different levels.

**Table 1**

| Example / Comparative Experiment | | Comp. Exp. A | Expl.1 | Comp. Expl.2 | Expl.3 | Comp. Expl.4 | Expl.5 | Comp. Expl.6 |
|---|---|---|---|---|---|---|---|---|
| EPDM 1 | | | 20 | | 30 | | 40 | |
| EPDM 2 | | | | 20 | | 30 | | 40 |
| WRT Neoprene* | | 5.5 | 5.5 | 5.5 | 5.5 | 5.5 | 5.5 | 5.5 |
| Butyl1* | | 89 | 69 | 69 | 59 | 59 | 49 | 49 |
| Butyl1 (as part of resin masterbatch) | | 6.4 | 6.4 | 6.4 | 6.4 | 6.4 | 6.4 | 6.4 |
| ZnO | | 6.4 | 6.4 | 6.4 | 6.4 | 6.4 | 6.4 | 6.4 |
| | | | | | | | | |
| Carbon black N-339* | | 55 | 55 | 55 | 55 | 55 | 55 | 55 |
| Castor oil | | 5 | | | | | | |
| Tudalen B-8014* | | | 5 | 5 | 5 | 5 | 5 | 5 |
| Resin * | | 8.6 | 8.6 | 8.6 | 8.6 | 8.6 | 8.6 | 8.6 |
| Stearic acid | | 1.5 | 1.5 | 1.5 | 1.5 | 1.5 | 1.5 | 1.5 |
| Total | phr | 177.4 | 177.4 | 177.4 | 177.4 | 177.4 | 177.4 | 177.4 |
| WRT Neoprene | | Supplied by DuPont; Mercaptan modified polychloroprene; Viscosity ML(1+4)@100°C = 46 | | | | | | |
| Butyl 1 | | IIR butyl 301, Supplied by Lanxess; Butyl rubber; viscosity ML(1+8)@125°C = 51, 1.85 mol% isoprene content 2.24 wt.% | | | | | | |
| Tudalen B-8014 | | Supplied by Hansen & Rosenthal; Paraffinic processing oil | | | | | | |
| resin | | alkylphenol resin | | | | | | |
| Carbon black N-339 | | Supplied by Cabot; High Abrasion Furnace Black | | | | | | |

| | | | | | | | | |
|---|---|---|---|---|---|---|---|---|
| *Ingredient Details; EPDM 1 and EPDM 2 see table 2 | | | | | | | | |

Table 2 polymer specifications for EPDM 1 and EPDM 2;

**Table 2**

| | **Units** | **EPDM 1** | **EPDM 2** | **Test Method** |
|---|---|---|---|---|
| Mooney viscosity ML (1+4) 125°C | MU | 33 | 67 | ISO 289 |
| Mooney viscosity ML (1+4) 100°C | MU | 57.3 | 100 | ISO 289 |
| Ethylene content | wt% | 55 | 65 | ASTM D 3900 |
| Third monomer type | | ENB | ENB | |
| Third Monomer content | wt% | 2.3 | 2.8 | ASTM D 6047 |
| Molecular weight (Mw) | Kg/mol | 195 | 270 | GPC |
| Molecular weight distribution (Mw/Mn) | | 2.9 | 2.8 | GPC |

Table 3 Shows the results of DeMattia flex fatigue testing. It can be seen that Comparative Experiment A starts to show Grade 2 damage after 2000 kcycles and complete failure after 4000 kcycles, whereas the Examples 1, 3, and 5 display no signs of flex fatigue damage after 8000 kcycles, when the test was stopped.

**Table 3**

| **DeMattia Flex Fatigue** | | Comp. Exp. A | Expl.1 | Comp. Expl.2 | Expl.3 | Comp. Expl.4 | Expl.5 | Comp. Expl.6 |
|---|---|---|---|---|---|---|---|---|
| Grade 1 | [kcycles] | | 0 | 0 | 0 | 0 | 0 | 0 |
| Grade 2 | [kcycles] | 2000 | 0 | 0 | 0 | 0 | 0 | 0 |
| Grade 3 | [kcycles] | 2250 | 0 | 0 | 0 | 0 | 0 | 0 |
| Grade 4 | [kcycles] | 2500 | 0 | 0 | 0 | 0 | 0 | 0 |
| Grade 5 | [kcycles] | | 0 | 0 | 0 | 0 | 0 | 0 |
| Grade 6 | [kcycles] | 3024 | 0 | 0 | 0 | 0 | 0 | 0 |
| Stopped | [kcycles] | 4000 | 8000 | 8000 | 8000 | 8000 | 8000 | 8000 |
| Condition | | Grade 10 | No cracks | No cracks | No cracks | No cracks | No cracks | No cracks |

Table 4 Shows the original tensile strength and the tensile strength after heat aging for 24 hours at 180°C. It can be seen from all of the examples that the presence of EPDM, regardless of the EPDM viscosity, always improves the retention of tensile strength after heat aging when compared with Comparative experiment A. It can also be seen by comparing Comparative experiment A with the other examples that the lower viscosity EPDM 1 gives a better retention of tensile strength than that achieved by using the same amount of the higher molecular weight EPDM 2. It can further be seen by comparing Comparative experiment A and comparison examples 2, 4 and 6 that as the level of EPDM increases, the percentage loss of tensile strength is much higher than for examples 1, 3 and 5 after aging for 24 hours

**Table 4**

| **Examples / Comparative Experiment** | | **Comp. Exp. A** | **Expl.1** | **Comp. Expl.2** | **Expl.3** | **Comp. Expl.4** | **Expl.5** | **Comp. Expl.6** |
|---|---|---|---|---|---|---|---|---|
| Cure 2xT90 MDR @ 180°C | | | | | | | | |
| T.S.* | [MPa] | 13.5 | 14.1 | 15.9 | 14.1 | 16.4 | 13.7 | 18.4 |
| | | | | | | | | |
| **Aged 24 hours @ 180°C** | | | | | | | | |
| T.S.* | [MPa] | 8.5 | 11.9 | 11.5 | 12.7 | 11.6 | 13.1 | 13.3 |
| *Change* | *[%]* | *-37.04* | *-15.60* | *-27.67* | *-9.93* | *-29.27* | *-4.38* | *-27.72* |

| | | | | | | | | |
|---|---|---|---|---|---|---|---|---|
| *T.S.= tensile strength | | | | | | | | |

### Example 2

Table 5 shows again the recipe of Comparative Experiment A, representing a typical resin cured butyl formulation as used for tire curing bladders. Also shown are Examples 7 and 8, which incorporate 30 and 40phr respectively of EPDM 1, and Comparison Examples 9 and 10, which incorporate respectively 30 and 40phr of EPDM 3 with a high amount of ENB. EPDM 3 has a similar molecular weight, molecular weight distribution and ethylene content as EPDM 1, but has a significantly higher level of ENB unsaturation. Details of EPDM can be seen in Table 6.

**Table 5**

| **Example / Comparative Experiment** | | **Comp. Exp. A** | **Expl. 7** | **Expl. 8** | **Comp. Expl. 9** | **Comp. Expl. 10** |
|---|---|---|---|---|---|---|
| EPDM 1 | | | 30 | 40 | | |
| EPDM 3 | | | | | 30 | 40 |
| BAYPREN 210* | | 5.5 | 5.5 | 5.5 | 5.5 | 5.5 |
| Butyl 1 | | 89 | 59 | 49 | 59 | 49 |
| Butyl 1 (as part of resin masterbatch) | | 6.4 | 6.4 | 6.4 | 6.4 | 6.4 |
| Carbon black N-339 | | 55 | 55 | 55 | 55 | 55 |
| SUNPAR 2280 | | | 10 | 10 | 10 | 10 |
| ZnO | | 6.4 | 6.4 | 6.4 | 6.4 | 6.4 |
| CASTOR OIL | | 5 | | | | |
| Resin | | 8.6 | 8.6 | 8.6 | 8.6 | 8.6 |
| Stearic acid | | 1.5 | 1.5 | 1.5 | 1.5 | 1.5 |
| Total | phr | 177.4 | 182.4 | 182.4 | 182.4 | 182.4 |

| | | | | | | |
|---|---|---|---|---|---|---|
| *Ingredient Details; BAYPREN 210: Supplied by LANXESS; Mercaptan modified polychloroprene; Viscosity ML(1+4)@100°C = 48+/-4 | | | | | | |

**Table 6**

| | **Units** | **EPDM 3** | **Test Method** |
|---|---|---|---|
| Mooney viscosity ML (1+4) 125°C | MU | 33 | ISO 289 |
| Mooney viscosity ML (1+4) 100°C | MU | 55 | ISO 289 |
| Ethylene content | wt% | 56 | ASTM D 3900 |
| Third monomer type | | ENB | |
| Third Monomer content | wt% | *11* | ASTM D 6047 |
| Molecular weight (Mw) | Kg/mol | 175 | GPC |
| Molecular weight distribution (Mw/Mn) | | 2.6 | GPC |

Results in Table 7 show that the presence of EPDM 3 at a level of 40phr gives the best result in higher original (unaged) tensile strength than was achieved with Comparative Experiments. This is associated with a higher cross-link density as expressed by delta S (ΔS), which is the difference between the minimum and maximum torque values of a cure curve obtained from a curemeter. In the case of this study, cure curves were produced using a moving die rheometer (MDR) manufactured by Alpha Technologies and operated in accordance with ASTM D 5289, using a cure temperature of 200°C and a test duration of 60 minutes. Data obtained from the cure curves of Comparative Experiment A, example 7 and example 8 and Comparison Examples 9 and 10 inclusive can be seen in Table 8.

It can also be seen from Table 7 that the aged tensile strength of Example 8 that contain 40phr of EPDM 1 respectively, show a significantly lower % change from their original tensile strength results after aging 24 hours at 180°C, when compared with the changes experienced by Comparative Experiments.

**Table 7**

| **Examples / Comparative Experiment** | | **Comp. Exp. A** | **Expl.7** | **Expl.8** | **Comp. Expl.9** | **Comp. Expl.10** |
|---|---|---|---|---|---|---|
| **Cure 2xT90 MDR @ 200°C** | | | | | | |
| T.S.* (original) | [MPa] | 12.2 | 14.3 | 13.5 | 16.1 | 16.8 |
| | | | | | | |
| **Aged 24 hours @ 180°C** | | | | | | |
| T.S.* | [MPa] | 8.5 | 11.9 | 12.6 | 10.6 | 10.6 |
| *Change* | *[%]* | *-32* | *-16.8* | *-6.7* | *-34.2* | *-36.9* |

| | | | | | | |
|---|---|---|---|---|---|---|
| *T.S.= tensile strength | | | | | | |

**Table 8**

| **Examples / Comparative Experiment** | | **Comp. Exp. A** | **Expl.7** | **Expl.8** | **Comp. Expl.9** | **Comp. Expl.10** |
|---|---|---|---|---|---|---|
| **MDR 60 minutes @ 200°C** | | | | | | |
| Min. Torque | [dNm] | 2.58 | 2.17 | 2.11 | 2.13 | 2.26 |
| Max. Torque | [dNm] | 12.55 | 11.66 | 11.4 | 14.71 | 15.09 |
| ΔS | [dNm] | 9.97 | 9.49 | 9.29 | 12.58 | 12.83 |

In Table 9 the De Mattia flex fatigue life is shown for Comparative Experiment A and Examples 7 and 8 as well as Comparison examples 9 and 10. Examples 7 and 8, which contain respectively 30 and 40phr EPDM 1, which has a low ENB level of 2.3 wt%, have significantly greater flex fatigue resistance than Comparison Examples 9 and 10, containing 30 and 40phr respectively of EPDM 3, which has a high ENB level of 11 wt% but similar molecular weight and molecular weight distribution.

**Table 9**

| **DeMattia Flex Fatigue** | | **Comp. Exp. A** | **Expl. 7** | **Expl. 8** | **Comp. Expl. 9** | **Comp. Expl. 10** |
|---|---|---|---|---|---|---|
| *Cure 1.5 x t90 @ 200°C* | | | | | | |
| Grade 1 | [kcycles] | 200 | 1000 | 2000 | | |
| Grade 2 | [kcycles] | | 3000 | 3000 | 100 | |
| Grade 3 | [kcycles] | 367 | | | 250 | |
| Grade 4 | [kcycles] | 400 | | | | |
| Grade 5 | [kcycles] | | | | | |
| Grade 6 | [kcycles] | | | | | |
| Stopped | [kcycles] | 400 Grade | 4000 Grade | 4000 Grade | 300 Grade | 100 Grade |
| Condition | | 4 | 2 | 2 | 7 | 7 |

## Claims

1. A rubber composition containing based upon parts by weight per 100 parts by weight rubber (phr):
(A) 20 - 50 phr of a copolymer of ethylene, at least one C3 to C23 α-olefin and a least one polyene monomer, whereby the copolymer unit derived from the polyene is 1 to 5 wt.%, by weight of the copolymer (A) and has a Mooney viscosity ML (1+4) at 100 °C from 51 or greater, in particular from 55 to 90 at 100 °C,
(B) 50 - 80 phr of butyl-type rubber and
(C) a resin-based curative, containing a phenol formaldehyde resin cross-linker as the only curing agent and an activator package comprising of a metal oxide and a halogen donor where a halogenated component (B) or halogenated cross-linker as part of component (C) is not already present.

2. The rubber composition of claim 1 wherein said (A) is a copolymer comprising
- 48 to 70 weight percent units derived from ethylene,
- 1 to 5 weight percent units derived from at least one non-conjugated diene, preferably at least one diene selected from the group consisting of 1,4-hexadiene (HD), dicyclopentadiene (DCPD), 5-ethylidene-2-norbornene (ENB) and 5-vinyl-2-norbornene (VNB) and
- the balance is the C₃ to C₂₃ α-olefin, preferably propylene.

3. The rubber composition of claim 1 wherein (B) is a butyl rubber comprising repeating units from isobutylene and 1 to 20 wt.-% isoprene.

4. The rubber composition of claim 1 wherein said resin curative (C) comprises of a combination of a polychloroprene rubber and a phenol-formaldehyde resin.

5. The rubber composition of claim 1 wherein said resin curative (C) comprises of a combination of a polychloroprene rubber and a brominated phenolic resin.

6. The rubber composition of claim 1 wherein it contains at least one oil and/or wax.

7. The rubber composition of claim 1 wherein the composition contains from 20 to 100 phr of a filler.

8. An expandable tire curing bladder of a cured rubber composition according to claim 1.

9. A method of shaping and curing an uncured pneumatic rubber tire in a mold using an expandable rubber bladder to shape and cure said uncured pneumatic rubber tire, comprised of the sequential steps of:
(A) inserting an uncured pneumatic rubber tire into a curing press comprised of a rigid mold having an expandable tire curing bladder positioned therein, said rigid mold having at least one molding surface,
(B) expanding said expandable rubber bladder by filling the internal portion of said expandable tire cure rubber bladder with a fluid to cause the expandable rubber bladder to expand outwardly against an inner surface of said uncured pneumatic rubber tire to force said uncured pneumatic tire against said molding surface(s) of said mold;
(C) curing said pneumatic rubber tire within said mold under conditions of heat and pressure, and
(D) deflating said expandable tire curing bladder and removing said cured pneumatic rubber tire from said mold;
wherein said expandable tire curing bladder used in this process is said expandable tire curing bladder of claim 8.

## Patentansprüche

1. Kautschukzusammensetzung enthaltend, auf Gewichtsteile pro 100 Gewichtsteile Kautschuk (phk) bezogen:
(A) 20 - 50 phk eines Copolymers von Ethylen, mindestens eines C3- bis C23-α-Olefins und mindestens eines Polyenmonomers, wobei die Copolymereinheit, die von dem Polyen abgeleitet ist, 1 bis 5 Gew.-%, auf das Gewicht des Copolymer (A) bezogen, beträgt und eine Mooney-Viskosität ML (1+4) bei 100 °C von 51 oder höher, insbesondere von 55 bis 90 bei 100 °C aufweist,
(B) 50 - 80 phk Kautschuk vom Butyltyp und
(C) ein Härtungsmittel auf Harzbasis, das einen Phenolformaldehyd-Harzvernetzer als das einzige Härtungsmittel und eine Aktivatorpackung enthält, die aus einem Metalloxid und einem Halogendonor besteht, wobei eine halogenierte Komponente (B) oder ein halogenierter Vernetzer als Teil der Komponente (C) nicht schon vorliegt.

2. Kautschukzusammensetzung nach Anspruch 1, wobei das (A) ein Copolymer ist umfassend
- 48-70 Gewichtsprozenteinheiten, die von Ethylen abgeleitet sind,
- 1 bis 5 Gewichtsprozenteinheiten, die von mindestens einem nichtkonjugierten Dien, bevorzugt mindestens einem Dien abgeleitet sind ausgewählt aus der Gruppe bestehend aus 1,4-Hexadien (HD), Dicyclopentadien (DCPD), 5-Ethyliden-2-norbornen (ENB) und 5-Vinyl-2-norbornen (VNB) und
- wobei der Rest C₃- bis C₂₃-α-Olefin, bevorzugt Propylen, ist.

3. Kautschukzusammensetzung nach Anspruch 1, wobei (B) ein Butylkautschuk ist, der Wiederholungseinheiten von Isobutylen und 1 bis 20 Gew.-% Isopren umfasst.

4. Kautschukzusammensetzung nach Anspruch 1, wobei das Harzhärtungsmittel (C) aus einer Kombination eines Polychloroprenkautschuks und eines Phenol-Formaldehydharzes besteht.

5. Kautschukzusammensetzung nach Anspruch 1, wobei das Harzhärtungsmittel (C) aus einer Kombination eines Polychloroprenkautschuks und eines bromierten Phenolharzes besteht.

6. Kautschukzusammensetzung nach Anspruch 1, wobei sie mindestens ein Öl und/oder Wachs enthält.

7. Kautschukzusammensetzung nach Anspruch 1, wobei die Zusammensetzung 20 bis 100 phk eines Füllstoffs enthält.

8. Expandierbare Reifenhärtungsblase aus einer gehärteten Kautschukzusammensetzung nach Anspruch 1.

9. Verfahren zum Gestalten und Härten eines ungehärteten Kautschukluftreifens in einer Form unter Anwendung einer expandierbaren Kautschukblase, um den ungehärteten Kautschukluftreifen zu gestalten und zu härten, bestehend aus den aufeinanderfolgenden Schritten des:
(A) Eingebens eines ungehärteten Kautschukluftreifens in eine Härtungspresse, die aus einer steifen Form besteht, in die eine expandierbare Reifenhärtungsblase positioniert ist, wobei die steife Form mindestens eine Formfläche aufweist,
(B) Expandierens der expandierbaren Kautschukblase durch Füllen des inneren Teils der expandierbaren Reifenhärtungskautschukblase mit einem Fluid, um zu verursachen, dass die expandierbare Kautschukblase sich nach außen gegen eine Innenfläche des ungehärteten Kautschukluftreifens expandiert, um den ungehärteten Luftreifen gegen die Formfläche(n) der Form zu drücken;
(C) Härtens des Kautschukluftreifens innerhalb der Form unter Bedingungen von Hitze und Druck und
(D) Luftablassens aus der expandierbaren Reifenhärtungsblase und Entfernens des gehärteten Kautschukluftreifens aus der Form;
wobei die bei diesem Vorgang verwendete expandierbare Reifenhärtungsblase die expandierbare Reifenhärtungsblase nach Anspruch 8 ist.

## Revendications

1. Composition de caoutchouc contenant, en parties en poids pour 100 parties en poids de caoutchouc (phr) :
(A) 20-50 phr d'un copolymère d'éthylène, d'au moins une α-oléfine en C₃ à C₂₃ et d'au moins un monomère polyène, le motif de copolymère dérivé du polyène représentant 1 à 5 % en poids par rapport au poids du copolymère (A) et ayant une viscosité Mooney ML (1+4) à 100 °C supérieure ou égale à 51, en particulier de 55 à 90 à 100 °C,
(B) 50-80 phr de caoutchouc de type butyle et
(C) un agent de vulcanisation à base de résine, contenant un agent de réticulation de type résine de phénol-formaldéhyde en tant qu'unique agent de vulcanisation et une préformulation d'activateur comprenant un oxyde métallique et un donneur d'halogène, un composant halogéné (B) ou un agent de réticulation halogéné en tant que partie du composant (C) n'étant pas déjà présent.

2. Composition de caoutchouc selon la revendication 1 dans laquelle ledit (A) est un copolymère comprenant
- 48 à 70 pour cent en poids de motifs dérivés d'éthylène,
- 1 à 5 pour cent en poids de motifs dérivés d'au moins un diène non conjugué, de préférence d'au moins un diène choisi dans le groupe constitué par le 1,4-hexadiène (HD), le dicyclopentadiène (DCPD), le 5-éthylidène-2-norbornène (ENB) et le 5-vinyl-2-norbornène (VNB), et
- le reste de l'α-oléfine en C₃ à C₂₃, de préférence de propylène.

3. Composition de caoutchouc selon la revendication 1 dans laquelle (B) est un caoutchouc butyle comprenant des motifs répétés provenant d'isobutylène et de 1 à 20 % en poids d'isoprène.

4. Composition de caoutchouc selon la revendication 1 dans laquelle ledit agent de vulcanisation de type résine (C) est constitué d'une association d'un caoutchouc polychloroprène et d'une résine de phénol-formaldéhyde.

5. Composition de caoutchouc selon la revendication 1 dans laquelle ledit agent de vulcanisation de type résine (C) est constitué d'une association d'un caoutchouc polychloroprène et d'une résine phénolique bromée.

6. Composition de caoutchouc selon la revendication 1 laquelle contient au moins une huile et/ou une cire.

7. Composition de caoutchouc selon la revendication 1, la composition contenant de 20 à 100 phr d'une charge.

8. Manchon de vulcanisation de pneu gonflable constitué d'une composition de caoutchouc selon la revendication 1 vulcanisée.

9. Procédé de mise en forme et de vulcanisation d'un pneumatique en caoutchouc non vulcanisé dans un moule à l'aide d'un manchon en caoutchouc gonflable pour mettre en forme et vulcaniser ledit pneumatique en caoutchouc non vulcanisé, constitué des étapes consécutives suivantes :
(A) l'introduction d'un pneumatique en caoutchouc non vulcanisé dans une presse à vulcaniser constituée d'un moule rigide dans lequel est disposé un manchon de vulcanisation de pneu gonflable, ledit moule rigide ayant au moins une surface de moulage,
(B) le gonflage dudit manchon en caoutchouc gonflable par remplissage de la partie interne dudit manchon de vulcanisation de pneu en caoutchouc gonflable avec un fluide pour amener le manchon en caoutchouc gonflable à gonfler vers l'extérieur pour venir contre une surface interne dudit pneumatique en caoutchouc non vulcanisé pour forcer ledit pneumatique non vulcanisé à venir contre ladite ou lesdites surfaces de moulage dudit moule ;
(C) la vulcanisation dudit pneumatique en caoutchouc à l'intérieur dudit moule dans des conditions d'application de chaleur et de pression et
(D) le dégonflement dudit manchon de vulcanisation de pneu gonflable et le retrait dudit pneumatique en caoutchouc vulcanisé dudit moule ;
dans lequel ledit manchon de vulcanisation de pneu gonflable utilisé dans ce processus est ledit manchon de vulcanisation de pneu gonflable selon la revendication 8.
